Europäisches Patentamt

European Patent Office

Office européen des brevets

(11) Publication number: **0 354 739**
**A2**

# EUROPEAN PATENT APPLICATION

(21) Application number: **89307960.8**

(22) Date of filing: **04.08.89**

(51) Int. Cl.⁵: **G 02 B 26/10**
**H 04 N 1/04**

(30) Priority: **06.08.88 JP 196690/88**

(43) Date of publication of application:
**14.02.90 Bulletin 90/07**

(84) Designated Contracting States: **DE FR GB**

(71) Applicant: **SEIKO INSTRUMENTS INC.**
**31-1, Kameido 6-chome Koto-ku**
**Tokyo 136 (JP)**

(72) Inventor: **Kawawada, Naoki**
**c/o Seiko Instruments Inc. 31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) **Scanning apparatus.**

(57) Laser beam scanning apparatus comprises means for emitting a laser beam, a mirror (41) for reflecting the laser beam towards a photo-sensitive medium (51, 52, 53) the mirror being rotatable to deflect the laser beam linearly in a primary scanning direction, and a main motor (9) for rotating the mirror. A secondary scanning system includes a pulse driven motor (39) for shifting the laser beam relative to the photo-sensitive medium in a secondary scanning direction substantially perpendicular to the primary scanning direction whereby to scan the laser beam two-dimensionally on the photo-sensitive medium. A control circuit (71 to 73, 91 to 96) includes means (91) for generating a common clock signal for controlling and driving both the main motor and the pulse driven motor.

FIG.1

EP 0 354 739 A2

## Description

## SCANNING APPARATUS

The present invention relates to scanning apparatus, and in particular to laser beam scanning apparatus.

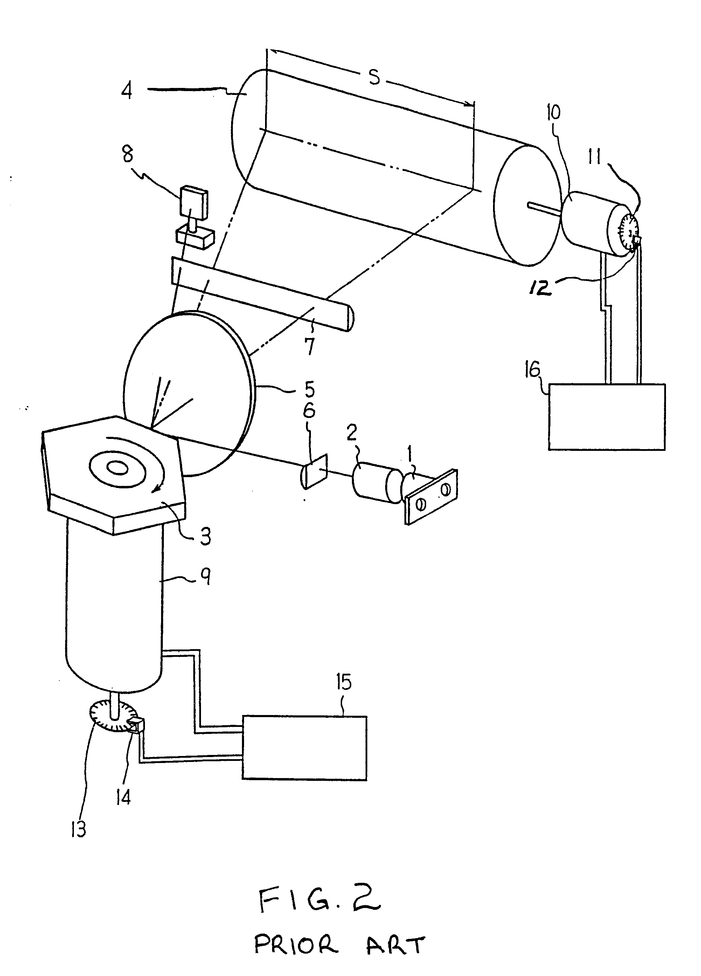

Conventional laser beam scanning apparatus utilised in a laser printer is shown in Figure 2 and employs, as a laser beam source, a semi-conductor laser 1 operable to turn on and off the generation of the laser beam in response to a laser modulation signal supplied according to an image signal. The laser beam scanning apparatus further comprises a collimator lens 2 for collimating the laser beam emitted from the semiconductor laser 1 to produce a substantially parallel laser beam, a polygonal mirror 3 rotatable at a predetermined rotational speed to deflect the laser beam passed by the collimator lens 2 in a primary scanning direction, and an fθ lens 5 disposed between the polygonal mirror 3 and a photo-sensitive drum 4 for converging the laser beam reflected by the polygonal mirror 3 onto the photo-sensitive drum 4. A first cylindrical lens 6 disposed between the collimator lens 2 and the polygonal mirror 3 and a second cylindrical lens 7 disposed between the fθ lens 5 and the photo-sensitive drum 4 serve to compensate for inclination of the reflective surfaces of the polygonal mirror 3. A photo-detector 8 detects a starting position in the primary scanning direction for writing by the laser beam issued by the second cylindrical lens 7. The fθ lens 5 and the cylindrical lens 7 constitute an optical converging arrangement for converging the beam reflected by the polygonal mirror 3 onto the surface of a photo-sensitive medium on the drum 4. A drive for the polygonal mirror 3 comprises a motor 9 of the DC type, a combination of a rotary encoder 13 and a photo-interrupter 14 for detecting the rate of rotation of the motor 9, and a motor driving circuit 15.

A secondary scanning arrangement functions to rotate the photo-sensitive drum 4. In a similar manner to the polygonal mirror drive, the secondary scanning arrangement comprises a DC motor 10 for rotating the photo-sensitive drum 4, a combination of a rotary encoder 11 and a photo-interrupter 12 for detecting the rate of rotation of the DC motor 10, and a motor rotating or driving circuit 16.

Since both of the motors 9 and 10 need their rate of rotation to be controlled, separate conventional control circuits are provided in the respective driving circuits. The driving circuit 15 and the driving circuit 16 have the same basic structure, and so only the driving circuit 15 will be explained below by way of example.

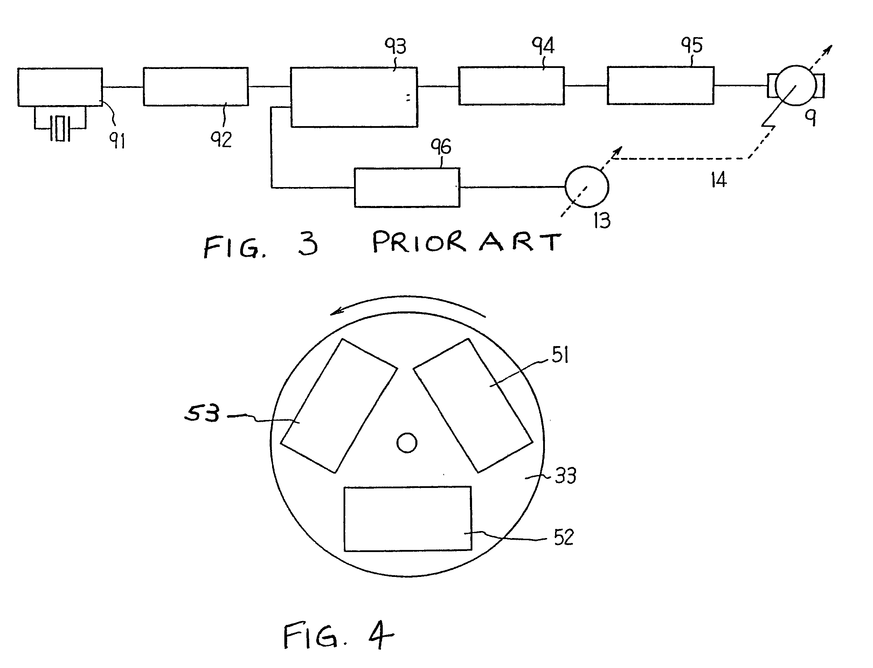

Figure 3 is a block diagram of the conventional driving circuit 15. In Figure 3, an oscillator circuit 91 utilising a quartz resonator generates an output signal, which is input into a frequency dividing circuit 92 to generate a reference clock signal. The photo-interrupter 14 co-operates with the rotary encoder 13, which is directly connected to a shaft of the motor 9, to supply a detection signal in synchronisation with the rotation of the motor. The detection signal is input into a waveform shaping circuit 96 effective to remove distortion from the waveform of the detection signal, an output signal of the waveform shaping circuit 96 being input into a phase comparator 93, which effects phase comparison between this output signal and the reference clock signal from the frequency dividing circuit 92. An output signal of the phase comparator 93 is input into an integrator circuit 94 to change the same into a voltage signal. The voltage signal of the integrator circuit 94 is then supplied to an amplifier 95 to generate the electric power needed for driving the motor 9. Such a circuit structure is known generally as a PLL control circuit.

Consequently, in a conventional laser beam scanning apparatus, a pair of PLL control circuits are provided, independently from one another, for separately controlling the rate of rotation of the motor 9 for driving the polygonal mirror 3 and the motor 10 operative to rotate the photo-sensitive drum 4.

The overall operation of a conventional apparatus will now be described briefly with reference to Figure 2. Firstly, the polygonal mirror 3 is rotated with a given rotational speed by means of a driving circuit 15. The rate of rotation of the polygonal mirror 3 is monitored by means of a combination of slits cut in the circumference of the rotary encoder 13 and the photo-interrupter 14. Namely, the photo-interrupter produces a pulse detection signal having a frequency proportional to the rate of rotation of the motor 9. The phase of this pulse signal is compared with that of the reference clock signal from the frequency dividing circuit 92 so as to effect the PLL control to rotate the motor 9 at a constant rate of rotation.

Next, cleaning and corona charging are carried out for the preparation of image writing on the photo-sensitive medium.

Thereafter, in order to rotate the photo-sensitive drum 4 at a predetermined secondary scanning speed, the driving circuit 16 effects PLL control of the rate of rotation of the DC motor 10.

Then, when the photo-sensitive drum 4 reaches approximately a predetermined angular position, the semi-conductor laser is turned on and the polygonal mirror 3 reflects the laser beam to scan the same in the primary scanning direction. After a given time interval from the moment when the scanned laser beam crosses the photo-sensor 8, the semi-conductor laser is turned on and off according to an input image signal to effect writing of the first line of the image. Following the writing of the first line, the photo-sensitive drum 4 continues to rotate at the constant rate of rotation and the photo-detector 8 detects the starting position for further writing in the primary scanning direction. Therefore, while the starting position for the writing of each line is aligned, the second and subsequent lines are written on the drum without duplication to reproduce thereby a two-dimensional image. The rotational speed of the photo-sensitive drum 4 is PLL controlled so as to equalise the pitch of the respective lines. By carrying out this writing operation for all of the lines or rows, the desired two-dimensional image can be reproduced on the photo-sensitive drum 4.

However, the operation of the known laser beam scanning system is based on control of the rate of rotation of the photo-sensitive drum and there is no direct control of the angular position of the drum. Further, the rotation rate control for the polygonal mirror and the rotation rate control for the photo-sensitive drum are independent of each other. Consequently, the conventional system has drawbacks or problems such as:

(1) the starting position of each line of writing is not accurately aligned in the direction of the secondary scanning, or in other words the pitch of the lines is not sufficiently accurate as to enable precise colour image reproduction, and

(2) it is not possible to start the writing of each line from a desired position in relation to the secondary scanning, or in other words the position of each of the lines may not be changed or adjusted for various printing conditions

The present invention seeks to synchronise the primary or horizontal scanning of an optical beam and the secondary or vertical scanning of the optical beam with one another to permit accurate image reproduction.

According to one aspect of the invention, there is provided scanning apparatus comprising primary scanning means arranged to move an optical beam linearly in a primary scanning direction relative to a photo-sensitive medium, secondary scanning means arranged to move the optical beam substantially perpendicularly to the primary scanning direction in a secondary scanning direction relative to the photo-sensitive medium, whereby to scan the optical beam two-dimensionally relative to the photo-sensitive medium, and characterised by a control circuit having means for generating a common clock signal for controlling operation of both the primary and the secondary scanning means.

For example, a pulse driven motor may be utilised as a driving source of the secondary scanning means, and the common clock signal may be utilised in the generation of activating pulses for the pulse driven motor.

By such a construction, it is possible:-

(1) to monitor the scanning position in the secondary or vertical scanning direction by counting the number of the drive pulses, and

(2) to synchronise the primary or horizontal scanning by the primary scanning means and the secondary or vertical scanning by the secondary scanning means with one another.

According to another aspect of the invention, there is provided laser beam scanning apparatus comprising means for emitting a laser beam, a mirror for reflecting the beam towards a photo-sensitive medium, the mirror being rotatable to deflect the laser beam linearly in a primary scanning direction, a main motor for rotating the mirror, means for shifting the laser beam relative to the photo-sensitive medium in a secondary scanning direction substantially perpendicular to the primary scanning direction whereby to scan the laser beam two-dimensionally relative to the photo-sensitive medium, the shifting means including a further motor, and characterised by control means for generating a common clock signal for controlling and driving the main motor and the further motor.

The invention will be described further, by way of example, with reference to the accompanying drawings, in which:-

Figure 1 is a schematic view of a multi-colour projecting exposure system incorporating laser beam scanning apparatus according to the present invention;

Figure 2 is a schematic view of conventional laser beam scanning apparatus;

Figure 3 is a block diagram of a polygonal mirror motor driving circuit in the conventional apparatus;

Figure 4 is a plan view of a rotary disk for use in the system of Figure 1;

Figure 5 is an exploded view of parts of the system of Figure 1;

Figure 6 is a sectional view through the laser beam scanning apparatus according to the present invention; and

Figure 7 is a block diagram of a motor driving circuit of the laser beam scanning apparatus according to the present invention.

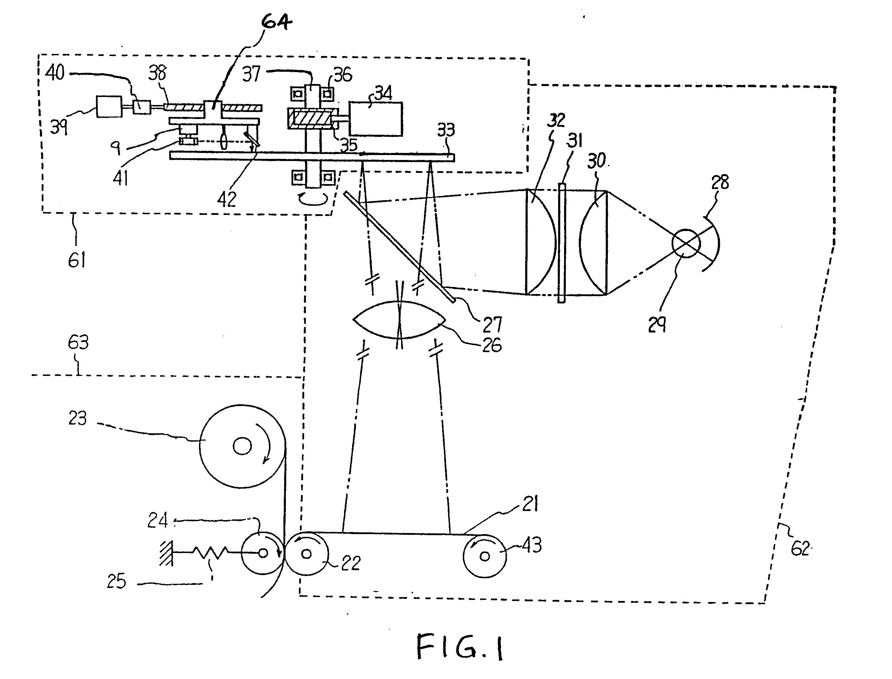

Figure 1 is a diagrammatic view of a multi-colour projecting exposure system utilising a liquid crystal cell of the laser written type as an intermediate image medium or a photo-sensitive medium and employing laser beam scanning apparatus according to the invention. In Figure 1, the multi-colour projecting exposure system comprises a projecting exposure system 62, an image writing system 61 including the laser beam scanning apparatus, and a developing system 63.

The projecting exposure system 62 comprises a halogen lamp 29, a mirror 28 for collecting and reflecting light from the halogen lamp 29, a pair of condenser lenses 30 and 32 for converting light emitted from the halogen lamp 29 into a somewhat convergent light beam, a filter 31 disposed between the condenser lenses 30 and 32 for cutting off thermal energy contained in the light beam, and a half mirror 27 for selectively reflecting the light beam from the halogen lamp 29 to a liquid crystal cell on a rotating or rotary disc 33 and transmitting light reflected from the liquid crystal cell. A projecting lens 26 serves for projecting and focusing the light transmitted by the half mirror 27 onto a photo-sensitive film 21, which is mounted between a winding roller 22 for winding the photo-sensitive film 21, and a back tension roller 43 for uniformly tensioning the photo-sensitive film 21. The photo-sensitive film 21 may be a micro-capsule sheet produced by Meed Company of U.S.A. The micro-capsule sheet comprises PET film coated uniformly with three different kinds of micro-capsules, each composed of a thin film enclosure made of, for example, gelatin and containing three different colour formers, a1, a2 and a3 exhibiting cyan, magenta and yellow tones, respectively, and three different photo-sensitive compositions b1, b2 and b3 photo-sensitive to light having different wavelengths λ1, λ2 and λ3 corresponding to the respective colour formers and effective to change their own viscosity to immobilise the colour formers.

The image writing system 61 comprises a laser beam primary scanning device including a semi-conductor laser (not shown), a polygonal mirror 41, a main motor 9 for rotating the polygonal mirror 41, and a reflective mirror 42. A bowl screw 38 drives a base 64, having the laser beam primary scanning device mounted thereon, in a secondary scanning direction, a pulse motor 39 rotating the bowl screw 38 by way of a flexible coupling 40. The base 64, bowl screw 38 and pulse motor 39 constitute a secondary scanning device. A rotary disk 33 (Figure 4 shows its plan view) is rotated on a shaft 37 supported in bearings 36 by means of another pulse motor 34, and a worm wheel 35 for transmitting driving force from the pulse motor 34 to the shaft 37.

As shown in Figure 4, the rotary disc 33 is provided with liquid crystal cells or panels 51, 52 and 53 for the exposure of yellow, cyan and magenta, respectively. The respective liquid crystal panels 51, 52 and 53 are disposed around the shaft 37 at equi-angular intervals of 120°. Each liquid crystal panel can have an image written thereon by means of a scanned laser beam.

The developing system 63 comprises a feed roller 23 for a receiver sheet, which is uniformly coated with developer effective to react with the colour formers a1, a2 and a3 on the photo-sensitive film to cause colour development reaction. A pressure roller 24 presses the superposed photo-sensitive film 21 and receiver sheet against each other in response to the pressure of a spring 25 acting on the pressure roller 24.

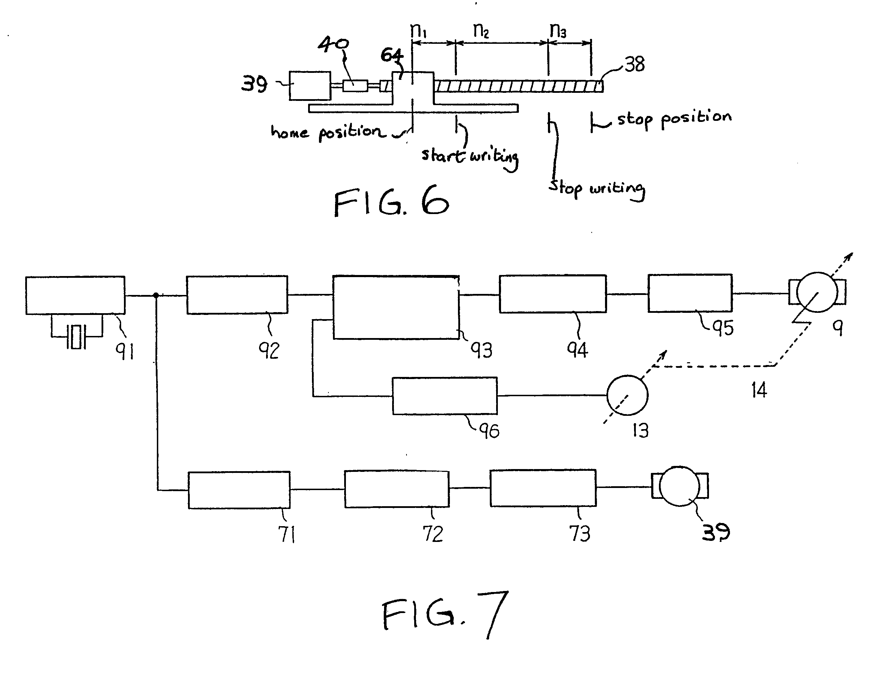

Figure 7 shows the circuitry of the image writing system 61, which circuitry includes a PLL control or feed back circuit for the motor 9 and a driving or feed forward circuit for the pulse motor 39. The PLL control circuit has the same structure as the conventional circuit shown in Figure 3 and includes an oscillator circuit 91 utilising a quartz resonator and generating an oscillating clock signal effective for producing a reference clock signal to regulate the rotation of the polygonal mirror. The pulse motor driving circuit shares the common oscillator circuit 91, and includes a frequency dividing circuit 71 for frequency dividing the oscillating clock signal output by the oscillator circuit 91 to reduce its frequency to a given value. A phase control circuit 72 controls the output signal from the frequency dividing circuit 71 to apply signal components with different phases to respective coils of the pulse motor 39 to set timings for the activation of the respective coils, a current amplifer 73 receiving the signal components from the circuit 72 to amplify the same to supply driving current pulses needed to actually drive the pulse motor 39.

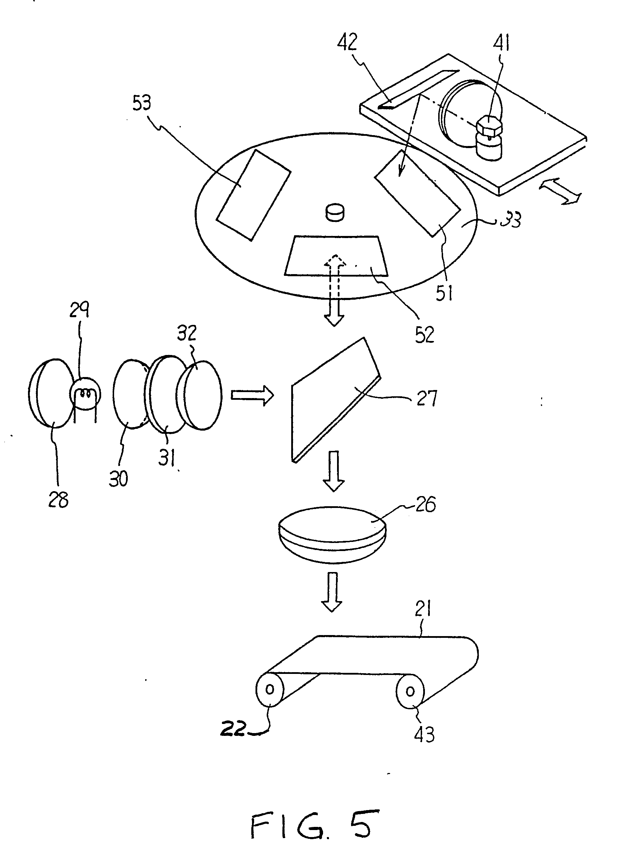

Next, the operation of the multi-colour projecting exposure system will be explained with reference to Figure 5. Firstly, the rotary disc 33 is angularly displaced to position the liquid crystal panel 51 for yellow exposure under the laser beam scanning apparatus.

Then, the secondary scanning device is initially moved to a home position as shown in Figure 6. Next, the secondary scanning device commences movement in the secondary scanning direction under the control of the pulse motor 39. When the pulse motor 39 has received the number n1 of the driving current pulses, the writing of the yellow component of the colour image is started by scanning the laser beam two-dimensionally in the primary and secondary scanning directions. When the pulse motor 39 has received the number n2 of the driving current pulses after the start of writing, the writing operation is stopped. The pulse motor 39 continues to receive the driving current pulses, and when it has received the number n3 of the pulses after the termination of the writing operation, the supply of pulses is terminated to stop the driving of the pulse motor 39. By means of such an operation, the yellow component of the colour image is written into the liquid crystal panel 51.

In the next step, a number n1 + n2 + n3 of reverse driving current pulses is applied to the pulse motor 39 to return the movable secondary scanning device to its home position. While this return operation of the laser beam secondary scanning device is taking place, the rotary disc 33 is angularly displaced to position the liquid crystal panel 52 for cyan exposure in place under the laser beam scanning apparatus. Thereafter, the cyan component of the colour image is written into the liquid crystal panel 52 for use in cyan exposure in a manner similar to the writing of the yellow component onto the first liquid crystal panel 51.

Further, again in a similar manner, the return of the secondary scanning device and the angular displacement of the rotary disc 33 are carried out to switch from the cyan related liquid crystal panel 52 to the magenta related liquid crystal panel 53. Then, by a similar writing operation, the magenta component of the colour image is written onto the liquid crystal panel 53.

Next, when the writing is complete, the liquid crystal panels are irradiated with light from the halogen lamp 29 and reflect the light onto the photo-sensitive film 21 to superpose the yellow, cyan and magenta colour image components on the photo-sensitive film 21 to compose a colour image.

More particularly, the rotary disc 33 is angularly displaced to position the yellow related liquid crystal panel 51 in alignment with the photo-sensitive film 21, and exposure of the film 21 by projection of the yellow colour image component onto the film 21 is carried out. After this exposure of the photo-sensitive film 21 is finished, the rotary disc 33 is angularly displaced and the cyan colour image component written in the liquid crystal panel 52 is projected onto the same portion of the photo-sensitive film 21 to superpose the yellow and cyan colour image components one on the other. In the same manner, the magenta colour image component written in the liquid crystal panel 53 is projected onto the film so that the yellow, cyan and magenta colour image components are superposed to compose the colour image.

By such an operation, the starting positions of the image writing in each of the respective liquid crystal panels 51, 52 and 53 for use in the respective yellow, cyan and magenta exposures in both of the primary scanning direction and of the secondary scanning direction are made coincident by means of the motor 9 and by means of the pulse motor 39 based on the writing timing control shown in Figure 6. Accordingly, the yellow, cyan and magenta colour image components projected onto the photo-sensitive film 21 are perfectly matched to avoid colour dislocation.

In the present embodiment, liquid crystal panels of the laser beam written type are used as an intermediate image writing medium. However, the image writing medium need not be liquid crystal panels, and other types of medium such as a photo-sensitive drum and a selenium plate can be used. Further, while the liquid crystal panels are switched by angular displacement of a rotary disc in the present embodiment, other methods and structures can be utilised to obtain the same function such as shifting the panels or their equivalent along a guide rail.

As described above, the present invention, while maintaining the conventional primary scanning arrangement and without providing an additional position sensor, enables the image to be written and reproduced from a desired position in the secondary scanning direction.

## Claims

1. Scanning apparatus comprising primary scanning means (9, 41, 42) arranged to move an optical beam linearly in a primary scanning direction relative to a photo-sensitive medium, secondary scanning means (38, 39, 40) arranged to move the optical beam substantially perpendicularly to the primary scanning direction in a secondary scanning direction relative to the photo-sensitive medium, whereby to scan the optical beam two-dimensionally relative to the photo-sensitive medium, and characterised by a control circuit (71 to 73, 91 to 96) having means (91) for generating a common clock signal for controlling operation of both the primary and the secondary scanning means.

2. Apparatus according to claim 1 characterised in that the primary scanning means includes a main motor (9) for moving the optical beam in the primary scanning direction, the secondary scanning means includes a pulse driven motor (39) for moving the optical beam in the secondary scanning direction, and the control circuit includes means (71 to 73, 92 to 96) for generating respectively in response to the common clock signal drive signals for driving the main motor and drive pulses for driving the pulse driven motor.

3. Apparatus according to claim 2 characterised in that the primary scanning means is carried by the secondary scanning means and is arranged to be movable by the pulse driven motor for moving the optical beam in the secondary scanning direction.

4. Apparatus according to claim 3 characterised in that the secondary scanning means are arranged to move the primary scanning means from a home position to a scanning start position in response to a first number of the drive pulses, to move the primary scanning means from the scanning start position to a scanning stop position in response to a second number of the drive pulses, and to move the primary scanning means from a scanning stop position to an end position in response to a third number of the drive pulses.

5. Apparatus according to claim 4 characterised in that the secondary scanning means is arranged to return the primary scanning means to the home position in response to the first plus the second plus the third numbers of the drive pulses.

6. Apparatus according to any of claims 2 to 5 characterised in that the control circuit comprises an oscillator circuit (91) for producing the common clock signal, feed back means (96) for monitoring the speed of the main motor to regulate the same according to the common clock signal, and pulse control means (72) for synchronising the drive pulses with the common clock signal.

7. Apparatus according to any preceding claim characterised in that the photo-sensitive medium comprises a liquid crystal panel (51, 52, 53).

8. Apparatus according to claim 7 characterised by a rotary disk (33) carrying a plurality of the liquid crystal panels at equi-angular spacings.

9. Apparatus according to any of claims 1 to 7 characterised in that the photo-sensitive medium comprises a photo-sensitive drum.

10. Apparatus according to any preceding claim characterised in that the photo-sensitive medium comprises a selenium plate.

11. Laser beam scanning apparatus comprising means (1) for emitting a laser beam, a mirror (41) for reflecting the beam towards a photo-sensitive medium (51, 52, 53), the mirror being rotatable to deflect the laser beam linearly in a primary scanning direction, a main motor (9) for rotating the mirror, means (38, 39, 40) for shifting the laser beam relative to the photo-sensitive medium in a secondary scanning direction substantially perpendicular to the primary scanning direction whereby to scan the laser beam two-dimensionally relative to the photo-sensitive medium, the shifting means including a further motor, and characterised by control means (71 to 73, 92 to 96) for generating a common clock signal for controlling and driving the main motor and the further motor.

FIG.1

EP 0 354 739 A2

FIG. 2
PRIOR ART

FIG. 3  PRIOR ART

FIG. 4

FIG. 5

FIG. 6

FIG. 7